# EUROPÄISCHE PATENTSCHRIFT

(11) **EP 2 567 194 B1**
(45) Veröffentlichungstag und Bekanntmachung des Hinweises auf die Patenterteilung: **24.10.2018**
(21) Anmeldenummer: 11715409.6
(22) Anmeldetag: 09.04.2011
(51) Int. Cl.: G01C 21/36, G06F 17/30, G10L 15/22, G06F 3/16, G06F 3/01, G06F 3/0488

(54) **VERFAHREN UND VORRICHTUNG ZUM BETREIBEN EINER NUTZERSCHNITTSTELLE**
METHOD AND DEVICE FOR OPERATING A USER INTERFACE
MÉTHODE ET DISPOSITIF POUR OPÉRER UNE INTERFACE UTILISATEUR

(30) Priorität: 04.05.2010 DE 102010019191
(43) Veröffentlichungstag der Anmeldung: 13.03.2013
(73) Patentinhaber: Volkswagen Aktiengesellschaft, 38440 Wolfsburg (DE)
(72) Erfinder: Dr. OEL, Peter, 97653 Bischofsheim (DE); NEUGEBAUER, Moritz, 10439 Berlin (DE); MISCHKE, Michael, 30167 Hannover (DE); WÄLLER, Christoph, 38106 Braunschweig (DE); BOHRER, Lorenz, 80337 München (DE); EHRKE, Jens, 38550 Isenbüttel (DE); SEITZ, Gordon, 38468 Ehra-Lessien (DE); SCHULZ, Stefan, 10965 Berlin (DE); GAUS, Imke, 10589 Berlin (DE); MEYER, Oliver, 10962 Berlin (DE)
(86) Internationale Anmeldenummer: PCT/EP2011/001776
(87) Internationale Veröffentlichungsnummer: WO 2011/137960

(56) Entgegenhaltungen:
- DE-A1-102006 051 331
- US-A1- 2008 189 187
- US-B1- 7 343 551

## Beschreibung

Die vorliegende Erfindung betrifft ein Verfahren zum Betreiben einer Nutzerschnittstelle, bei dem eine erste Nutzereingabe erfasst wird, eine Konfidenzanalyse durchgeführt wird, bei der die Nutzereingabe mit mehreren gespeicherten Datenbankeinträgen verglichen wird und jedem so verglichenen Datenbankeintrag ein Wert eines Konfidenzmaßes zugeordnet wird, der die Übereinstimmung der Nutzereingabe mit diesem Datenbankeintrag bewertet. In Abhängigkeit vom Ergebnis der Konfidenzanalyse werden unterschiedliche Klassen von Systemantworten generiert, die sich in wenigstes einem Merkmal voneinander unterscheiden, wobei eine Systemantwort einer ersten Klasse als unterscheidendes erstes Merkmal eine Systemausgabe umfasst, die zu einer zweiten Nutzereingabe auffordert, und eine Systemantwort einer zweiten Klasse als unterscheidendes zweites Merkmal die automatische Auswahl eines Datenbankeintrags umfasst. Die Erfindung betrifft ferner eine entsprechend ausgestaltete Vorrichtung, insbesondere zur Durchführung dieses Verfahrens, sowie ein Fahrzeug mit einer solchen Vorrichtung.

Gattungsgemäße Nutzerschnittstellen finden ein breites Anwendungsspektrum für die Bedienung von Geräten, insbesondere elektronischen Einrichtungen. Insbesondere ist der Vergleich von Nutzereingaben mit in einer Datenbank gespeicherten Datenbankeinträgen aus dem technischen Gebiet der Suchmaschinen bekannt, bei denen eine Nutzereingabe mit Datenbankeinträgen verglichen wird und die Relevanz eines jeden Datenbankeintrags mittels eines Algorithmus berechnet und ein dazugehöriges Konfidenzmaß ausgegeben wird, das die Relevanz quantifiziert. Falls das Suchergebnis eindeutig ist, wird der entsprechende Datenbankeintrag ausgegeben oder auf seiner Basis eine Funktion ausgeführt. Ist das Suchergebnis nicht eindeutig, so wird dabei entweder typischerweise eine Trefferliste oder eine systemseitige Rückfrage ausgegeben. Dabei bilden Nutzereingabe und Systemausgabe ein dialogähnliches Schema, insbesondere wenn eine auf eine Nutzereingabe reagierende Systemausgabe zu einer weiteren Nutzereingabe auffordert.

Solche Nutzerschnittstellen werden insbesondere dann eingesetzt, wenn angenommen wird, dass erfasste Daten entweder durch unvollständige oder mehrdeutige Eingaben seitens des Nutzers oder durch systemseitig ungenaues Erfassen fehlerhaft sind, wie dies beispielsweise bei Spracheingaben in lauter Umgebung oder bei manuellen Eingaben in einer durch Vibrationen gestörten Umgebung der Fall ist. Daher kommen solche interaktiven Nutzerschnittstellen zunehmend in Fahrzeugen zum Einsatz, um den Nutzungskomfort der zahlreichen Funktionseinrichtungen, wie beispielsweise einem Navigationssystem, Telekommunikationseinrichtungen oder Infotainmenteinrichtungen, zu verbessern.

Des Weiteren muss in einem Fahrzeug berücksichtigt werden, dass der Fahrer bei einem Bedienvorgang über die Nutzerschnittstelle nicht vom Straßenverkehr abgelenkt wird. Daher wurde vorgeschlagen, eine multimodale Nutzereingabe zu ermöglichen, wobei unter den möglichen Eingabemodalitäten auf die jeweils für den Nutzer günstigste gewechselt werden kann. Zu den gängigen Eingabemodalitäten zählen insbesondere Eingaben über Sprache, Tastatur, Touchscreens und berührungslose Gesten. Die DE 10 2008 008 948 A1 beschreibt beispielsweise ein solches Verfahren, bei dem während einer mehrteiligen Nutzereingabe auch während der Eingabe zwischen zwei Eingabemodalitäten gewechselt werden kann.

In der DE 103 13 222 A1 ist ein Verfahren zur Eingabe von Ortsnamen angegeben, bei dem mehrdeutige Ortsnamen in einer Grafik, beispielsweise an den entsprechenden geographischen Positionen auf einer Landkarte, dargestellt werden. Der Nutzer hat dann die Möglichkeit, mithilfe dieses Hinweises eine schnelle und zielsichere Auswahl des gewünschten Ortsnamens durchzuführen.

In der DE 100 60 654 C1 ist ein Verfahren und eine Vorrichtung zu einer automatischen Auskunftserteilung mittels einer Suchmaschine beschrieben, in der gesuchte Informationen zusammen mit weiteren, zugehörigen Attributen in Form von Datensätzen gespeichert sind. Zu einem vom Nutzer eingegebenen Suchargument für mehrere in einem Datensatz gespeicherte Attribute findet eine Relevanzüberprüfung mit den gespeicherten Datenbankeinträgen statt und über eine Gewichtung mit Konfidenzwerten wird der Datensatz mit dem größten Gesamtkonfidenzwert ausgegeben. Im Falle mehrerer Datensätze mit nahezu gleichgroßem Konfidenzwert wird der Nutzer solange zu weiteren Nutzereingaben zu dem Datensatz aufgefordert, bis der gesuchte Datensatz eindeutig identifiziert wurde.

Die US 2006/058974 A1 beschreibt ein Verfahren zum Wechselwirken von Käufern mit einem automatischen System zum Einkaufen mittels elektronischen Geschäftsverkehrs. Dabei wird ein Konfidenzwert für jede semantische Eingabe bestimmt. Diese Konfidenzwerte werden dann mit einem von einem Nutzer oder einem Administrator konfigurierbaren Grenzwert verglichen. Überschreitet der Konfidenzwert einen oberen Grenzwert, wird der Eintrag automatisch in das Feld eingetragen. Unterschreitet der Konfidenzwert hingegen einen unteren Grenzwert, so wird der Nutzer um die Auswahl des gewünschten Eintrags aus einer Liste gebeten. Kann das System eine Mehrdeutigkeit bei der Eingabe nicht auflösen, so wird die Eingabe entweder ignoriert oder der Nutzer wird darum gebeten, die Mehrdeutigkeit aufzulösen.

Die US 7 343 551 B1 beschreibt ein Verfahren zum automatischen Vervollständigen von Textfeldern. Dazu werden in ein Formular eingegebene Werte erfasst und anhand ihrer semantischen Ähnlichkeit mit möglichen Voraussagen verglichen. Dabei wird eine Wahrscheinlichkeit für die Voraussagen ermittelt. Die Voraussage mit der höchsten Wahrscheinlichkeit kann vorgewählt und angezeigt werden, wobei der Nutzer die Voraussage bestätigen oder durch weitere Eingaben Korrekturen vornehmen kann.

Ferner beschreibt die DE 10 2006 051331 A1 ein Verfahren zur Auswahl eines Fahrziels aus einer Menge gespeicherter Orte. Dabei wird ein erkannter Ort angezeigt und, falls innerhalb einer vorgegebenen Zeit keine Eingabe erfolgt, der dargestellte Ortsname automatisch ausgewählt und eine Routenberechnung zu dem Ort durchgeführt.

Es ist die Aufgabe der vorliegenden Erfindung, ein Verfahren und eine entsprechende Vorrichtung zum Betreiben einer Nutzerschnittstelle mit Systemantworten einer ersten und zweiten Klasse mit unterscheidenden ersten und zweiten Merkmalen der eingangs genannten Art bereitzustellen, die eine verbesserte Dialogeffizienz aufweisen. Insbesondere soll die Dialogdauer und/oder die Anzahl der Nutzerinteraktionen reduziert werden.

Diese Aufgabe wird erfindungsgemäß durch ein Verfahren mit den Merkmalen des Anspruchs 1 sowie einer Vorrichtung mit den Merkmalen des Anspruchs 6
gelöst. Vorteilhafte Aus- und Weiterbildungen ergeben sich aus den abhängigen Ansprüchen.

Das erfindungsgemäße Verfahren ist dadurch gekennzeichnet, dass eine Systemantwort einer dritten Klasse das erste und zweite Merkmal, d.h. die Merkmale der Systemantworten der ersten und zweiten Klasse, umfasst, wobei nach Ablauf einer Zeitspanne die Systemantwort der dritten Klasse automatisch in die Systemantwort der ersten oder zweiten Klasse übergeht. Systemantworten einer dritten Klasse mit beiden Merkmalen der ersten und zweiten Klasse haben den Vorteil, dass bei einem nicht eindeutigen Ergebnis der Konfidenzanalyse dem Nutzer beide Handlungsoptionen der ersten und zweiten Klasse bereitgestellt werden können. Dabei kann eine der beiden Klassen für den Nutzer erkennbar als Standard oder "Default" gesetzt werden, in die dann nach Ablauf der Zeitspanne der automatische Übergang ohne weitere Nutzerinteraktion erfolgt. Der Nutzer kann somit erkennen, ob bei einer zwar uneindeutigen oder unvollständigen Eingabe seinerseits das System die gewünschte Eingabe erkannt hat. Dies ist vorteilhaft, wenn eine weitere Nutzereingabe, und sei es nur eine Bestätigung des systemseitigen Vorschlags, den Nutzer von anderen Tätigkeit abzulenken droht, beispielsweise beim Führen eines Fahrzeugs.

Vorteilhafterweise erfolgt der Übergang der Systemantwort in Abhängigkeit von dem Ergebnis der Konfidenzanalyse. Insbesondere entscheidet das Ergebnis der Konfidenzanalyse, ob ein Übergang von der Systemantwort der dritten Klasse in die Systemantwort der ersten Klasse oder in die Systemantwort der zweiten Klasse stattfindet. Alternativ oder auch zusätzlich kann das Ergebnis der Konfidenzanalyse zum Regeln der Länge der Zeitspanne oder zur Ausgestaltung des Übergangs zwischen der Systemantwort der zwei Klassen hinzugezogen werden. Beispielsweise könnte ein Übergang eine Warnmeldung enthalten, dass die systemseitige Auswahl aufgrund des Ergebnisses der Konfidenzanalyse möglicherweise inkorrekt ist. Dadurch kann zwischen einem schnellen Dialogablauf und einer verminderten Gefährdung einer Funktionsfehlauslösung abgewogen werden.

Erfindungsgemäß erfolgt in Abhängigkeit von dem Ergebnis der Konfidenzanalyse die Aktivierung einer Funktion auf Basis eines ausgewählten Datenbankeintrags sofort oder nach Ablauf einer Zeitspanne. Typischerweise erfolgt die Auswahl und Aktivierung der Funktion auf Basis des Datenbankeintrags mit dem höchsten Konfidenzmaß. Beispielsweise erfolgt bei einem hinreichend eindeutigen Ergebnis der Konfidenzanalyse sofort die Aktivierung einer Funktion, während bei einem weniger eindeutigen Ergebnis damit bis zum Ablauf der Zeitspanne gewartet wird. Dies hat im ersten Fall den Vorteil, dass der Dialogablauf beschleunigt wird.

Die Zeitspanne, nach dessen Ablauf der automatische Übergang der Systemantwort ohne weitere Nutzerinteraktion erfolgt, ist zweckmäßigerweise so dimensioniert, dass eine Interaktion seitens des Nutzers möglich ist. Die Dauer der Zeitspanne kann an die jeweiligen Anforderungen angepasst werden und liegt typischerweise im Bereich von einigen Sekunden bis zu einigen zehn Sekunden.

In Abhängigkeit von dem Ergebnis der Konfidenzanalyse umfasst erfindungsgemäß die Aufforderung zur zweiten Nutzereingabe eine Darstellung von Datenbankeinträgen, deren Anzahl begrenzt ist und/oder deren zugeordnete Werte des Konfidenzmaßes oberhalb eines ersten Schwellenwerts liegen. Diese sogenannten Trefferlisten zeigen dem Nutzer Alternativvorschläge, die er schnell und bequem aus der angezeigten Liste auswählen kann, ohne eine komplette Neueingabe durchzuführen.

Dabei können auch die Werte des Konfidenzmaßes selber angezeigt oder visualisiert werden. Beispielsweise werden die Werte des Konfidenzmaßes als Prozentzahl hinter dem zugehörigen Datenbankeintrag dargestellt oder aber ein Datenbankeintrag wird in Abhängigkeit von dem Wert entsprechend farblich markiert oder es wird eine dem jeweiligen Wert proportionale Größendarstellung gewählt. Auf diese Weise kann der Nutzer das Ergebnis der Konfidenzanalyse besser visuell erfassen und beurteilen.

Erfindungsgemäß werden den Datenbankeinträgen Positionen auf einer Karte zugeordnet und die Datenbankeinträge werden auf der Karte an der zugeordneten Position graphisch repräsentiert. Nach Ablauf der Zeitspanne wird dann automatisch in einen Bereich um den Datenbankeintrag mit dem höchsten Konfidenzmaß hineingezoomt. Ein solches Verfahren ist besonders vorteilhaft für ein Navigationssystem in einem Fahrzeug.

Für den Fall, dass die systemseitige Auswahl des Datenbankeintrags mit dem höchsten Konfidenzmaß nicht dem gewünschten Datenbankeintrag entspricht, den der Nutzer durch seine Nutzereingabe auswählen wollte, ist es zweckmäßig, eine Korrekturoption in das erfindungsgemäße Verfahren zu integrieren. Daher kann erfindungsgemäß vorgesehen sein, dass bei einer Systemantwort der dritten Klasse vor Ablauf der Zeitspanne eine zweite Nutzereingabe erfolgen kann, auf dessen Basis die Aktivierung der Funktion erfolgt. Die zweite Nutzereingabe ist insbesondere eine Auswahl eines angezeigten Datenbankeintrags, dessen Konfidenzmaß einen der nächst höchsten Werte aufweist. Es ist dabei unerheblich, ob bereits auf Basis eines vorher fälschlicherweise ausgewählten Datenbankeintrags die Funktion aktiviert wurde oder dies erst nach Ablauf des Zeitintervall vorgesehen war. In ersterem Falle wird die Funktionsausführung auf Basis des fälschlicherweise ausgewählten Datenbankeintrags zweckmäßigerweise terminiert.

Das Ergebnis der Konfidenzanalyse ist die zentrale Bedingung zur Steuerung des erfindungsgemäßen Verfahrens. Bei der Durchführung einer Konfidenzanalyse wird angenommen, dass systemseitig erfasste Daten z.B. durch unvollständige oder mehrdeutige Eingaben oder durch ungenaues Erfassen fehlerhaft sind, wie dies beispielsweise bei Spracheingaben in lauter Umgebung oder bei manuellen Eingaben in einer durch Vibrationen gestörten Umgebung der Fall ist. Insbesondere kann das Ergebnis der Konfidenzanalyse dabei eindeutig oder weniger eindeutig sein. Im Sinne der Erfindung ist ein ideal eindeutiges Ergebnis der Konfidenzanalyse, wenn genau ein Datenbankeintrag mit einem sehr hohen Konfidenzmaß ermittelt wird. Ein weniger eindeutiges Ergebnis zeichnet sich dadurch aus, dass beispielsweise kein oder aber mehrere Datenbankeinträge mit einem sehr hohen Konfidenzmaß ermittelt werden.

Das Konfidenzmaß kann dabei in unterschiedlicher Weise berechnet werden und beispielsweise in Prozent ausgedrückt werden, wie dies z.B. aus dem Gebiet der Suchmaschinen bekannt ist. Die im konkreten Falle benutzte Berechnungsgrundlage ist dabei nicht wesentlich und kann an die vorliegenden Gegebenheiten angepasst werden. Handelt es sich bei den Datenbankeinträgen um einzelne Wörter, so könnte ein Vergleich auf Buchstabenbasis durchgeführt werden und die Übereinstimmung der Buchstaben in Prozent in das Konfidenzmaß einfließen. Ferner könnte das Konfidenzmaß für häufig ausgewählte Datenbankeinträge erhöht werden, wenn hier von einer erhöhten Wahrscheinlichkeit einer erneuten Auswahl ausgegangen werden kann.

Das Ergebnis der Konfidenzanalyse umfasst daher erfindungsgemäß typischerweise, ob der höchste Wert des Konfidenzmaßes einen zweiten Schwellenwert überschreitet. Dieser zweite Schwellenwert liegt typischerweise sehr hoch nahe einem möglichen Optimum (z.B. > 90%). Alternativ oder auch zusätzlich fließt in das Ergebnis ein, wie viele Werte des Konfidenzmaßes diesen zweiten Schwellenwert überschreiten. Alternativ oder auch zusätzlich kann berücksichtigt werden, ob die Differenz zwischen dem höchsten und einem der nächst höchsten Werte des Konfidenzmaßes einen dritten Schwellenwert unterschreiten. Dieser dritte Schwellenwert ist typischerweise klein, insbesondere klein gegenüber dem zweiten Schwellenwert (z.B. < 10%).

In Ausgestaltungen des erfindungsgemäßen Verfahrens kann vorgesehen sein, dass die Art der graphischen Darstellung von dem Ergebnis der Konfidenzanalyse abhängt. Beispielsweise kann eine Trefferliste in Abhängigkeit von dem Ergebnis umso kleiner dargestellt werden, je eindeutiger das Ergebnis ausfällt.

Alternativ oder auch zusätzlich kann in Abhängigkeit von den Ergebnissen der Konfidenzanalyse eine Systemantwort weitere Merkmale umfassen. Beispielsweise können akustische oder haptische Signale ausgegeben werden, um den Nutzer multimodal auf das konkrete Ergebnis hinzuweisen.

Falls mehrere Anzeigeflächen oder eine sehr großflächige Anzeigefläche zur Verfügung steht, kann in Abhängigkeit von dem Ergebnis der Konfidenzanalyse die Systemausgabe auf unterschiedlichen Anzeigeflächen oder an unterschiedlichen Positionen auf einer Anzeigefläche erfolgen. Wenn aufgrund der Konfidenzanalyse mit hoher Wahrscheinlichkeit von einem korrekt ausgewählten Datenbankeintrag auszugehen ist, kann eine Trefferliste an einer weniger prominenten Position auf der Anzeigefläche oder auf einer sekundären Anzeigefläche dargestellt werden, was insbesondere dann vorteilhaft ist, wenn parallel bereits eine Funktion aktiviert wurde, die einen Großteil der Anzeigefläche selbst benötigt. Hierdurch wird die Ablenkungsgefahr für den Nutzer reduziert, insbesondere wenn davon ausgegangen wird, dass der Nutzer keine andere Auswahl treffen oder keine Korrektur eingeben möchte.

Die erfindungsgemäße Vorrichtung zum Betreiben einer Nutzerschnittstelle umfasst Mittel zum Erfassen von Nutzereingaben, eine Schnittstelle zu einer Funktionseinrichtung, in der Datenbankeinträge gespeichert sind und eine Anzeigefläche zum visuellen Darstellen von Systemausgaben. Sie umfasst des Weiteren eine Steuervorrichtung zur Durchführung einer Konfidenzanalyse, wobei Vergleiche zwischen Nutzereingaben mit mehreren gespeicherten Datenbankeinträgen durchführbar sind und jedem so verglichenen Datenbankeintrag ein Wert eines Konfidenzmaßes zuordenbar ist, der die Übereinstimmung der Nutzereingabe mit diesem Datenbankeintrag bewertet. Mittels der Steuervorrichtung sind in Abhängigkeit vom Ergebnis der Konfidenzanalyse unterschiedliche Systemantworten generierbar, die sich in wenigstes einem Merkmal voneinander unterscheiden, wobei eine Systemantwort einer ersten Klasse als unterscheidendes erstes Merkmal eine Systemausgabe umfasst, die zu einer zweiten Nutzereingabe auffordert, und eine Systemantwort einer zweiten Klasse als unterscheidendes zweites Merkmal die automatische Auswahl eines Datenbankeintrags umfasst. Dabei ist mittels der Steuervorrichtung eine Systemantwort einer dritten Klasse erzeugbar, die das erste und zweite Merkmal umfasst, wobei nach Ablauf einer Zeitspanne die Systemantwort der dritten Klasse automatisch in die eine Systemantwort der ersten oder zweiten Klasse übergeht. In Abhängigkeit von dem Ergebnis der Konfidenzanalyse ist eine Funktion auf Basis eines ausgewählten Datenbankeintrag sofort oder nach Ablauf einer weiteren Zeitspanne aktivierbar. In Abhängigkeit von dem Ergebnis der Konfidenzanalyse umfasst die Aufforderung zur zweiten Nutzereingabe eine Darstellung von Datenbankeinträgen, deren Anzahl begrenzt ist und/oder deren zugeordneten Werten des Konfidenzmaßes oberhalb eines ersten Schwellenwerts liegen. Den Datenbankeinträgen sind Positionen auf einer Karte zuordenbar und die Datenbankeinträge werden auf der Karte an der zugeordneten Position graphisch repräsentiert, wobei nach Ablauf der Zeitspanne automatisch in einen Bereich um den Datenbankeintrag mit dem höchsten Konfidenzmaß hineingezoomt wird. Die Vorrichtung ist insbesondere zum Durchführen des erfindungsgemäßen Verfahrens geeignet. Sie weist somit auch die Vorteile des erfindungsgemäßen Verfahrens auf.

Erfindungsgemäß ist des Weiteren ein Fahrzeug mit einer solchen Vorrichtung zum Betreiben einer Nutzerschnittstelle ausgestattet.

Die Erfindung wird nun anhand von Ausführungsbeispielen mit Bezug zu den Figuren näher erläutert.
- Figur 1: zeigt schematisch den Aufbau eines Ausführungsbeispiels der erfindungsgemäßen Vorrichtung zum Betreiben einer Benutzerschnittstelle,
- Figuren 2a - 2c: zeigen graphische Darstellungen von Datenbankeinträgen, die gemäß einem Ausführungsbeispiel des erfindungsgemäßen Verfahrens erzeugt wurden,
- Figur 3: zeigt schematisch den Aufbau einer Trefferliste, die gemäß einem Ausführungsbeispiel des erfindungsgemäßen Verfahrens generiert wurde, und
- Figuren 4a - 4b: zeigen schematisch die Zuordnung der Klassen der Systemantworten in Abhängigkeit von dem Ergebnis der Konfidenzanalyse gemäß einem Ausführungsbeispiel des erfindungsgemäßen Verfahrens.

Das im Folgenden beschriebene Ausführungsbeispiel betrifft den Einsatz der Vorrichtung und des Verfahrens in einem Fahrzeug, insbesondere einem Kraftfahrzeug. Mittels des Verfahrens und der Vorrichtung kann den Fahrzeuginsassen eine Nutzerschnittstelle im Fahrzeug bereitgestellt werden. Es wird jedoch darauf hingewiesen, dass die Vorrichtung und das Verfahren auf gleiche Weise auch in anderen Geräten, wie zum Beispiel tragbaren Geräten, eingesetzt werden können.

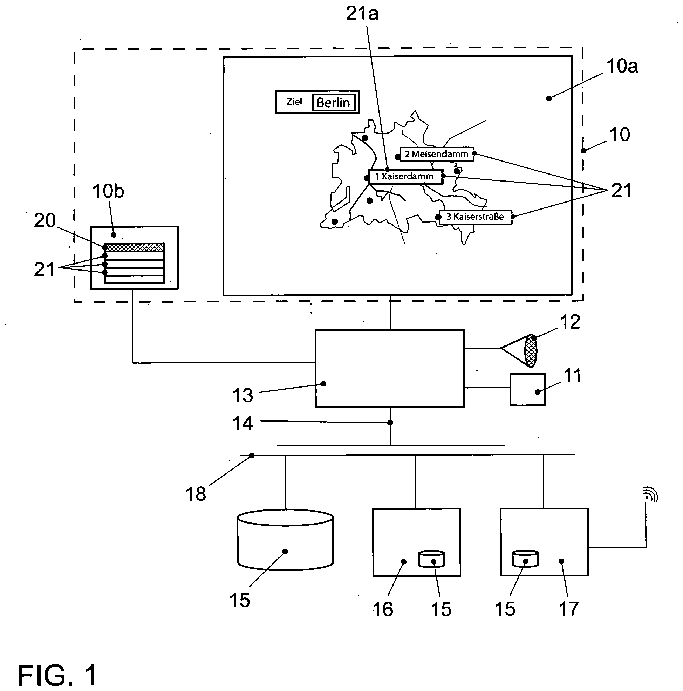

In Figur 1 ist schematisch der Aufbau eines Ausführungsbeispiels der erfindungsgemäßen Vorrichtung zum Betreiben einer Nutzerschnittstelle dargestellt. Eine Anzeigefläche 10 in einem Fahrzeug ist über eine Steuervorrichtung 13 mit Mitteln 11 zur manuellen Eingabe und Mitteln 12 zur Spracheingabe verbunden. Die Steuervorrichtung 13 ist über eine Schnittstelle 14 mit dem Datenbus 18 im Fahrzeug verbunden, über den die Steuervorrichtung Zugriff auf eine Datenbank 15 hat. Die Datenbank 15 kann dabei eine übergreifende Datenbank sein, in der alle im Fahrzeug anfallenden Daten der diversen Funktionseinrichtungen abrufbar sind. Jede Funktionseinrichtung umfasst zusätzlich eine eigene Datenbank 15, in der die zu der Funktionseinrichtung spezifischen Daten gespeichert sind. Bei den Funktionseinrichtungen handelt es sich beispielsweise um ein fest installiertes oder auch vom Fahrzeug lösbares Navigationssystem 16 und ein Funktionssystem 17 mit einer Funkschnittstelle, z.B. ein Mobiltelefon.

Die Mittel 12 zur Spracheingabe umfassen ein Mikrophon zum Empfang akustischer Signale, ein Softwaremodul zur Sprachaktivitätserkennung sowie einen adaptiven Filter zur Störgeräuschunterdrückung. Die Sprachaktivitätserkennung und der adaptive Filter können alternativ auch in anderer Hardware lokalisiert sein und beispielsweise über die Steuervorrichtung 13 mit den Mitteln 12 zur Spracheingabe in Verbindung stehen. Die Mittel 11 zur manuellen Eingabe können als Tastatur oder manuelle Bedienelemente, z.B. Drehdrücksteller, ausgestaltet sein. Die Anzeigefläche 10 kann ganz oder bereichsweise eine berührungsempfindliche Oberfläche aufweisen, so dass auch über die Anzeigefläche manuelle Eingaben getätigt werden können. Beispielsweise könnte auf einem Teilbereich der Anzeigefläche 10 eine Tastatur angezeigt werden und eine manuelle Eingabe durch Berühren einer angezeigten Taste erfolgen.

Auf der Anzeigefläche 10 können verschiedene Informationen graphisch dargestellt werden. Insbesondere handelt es sich bei den Informationen um in einer der Datenbanken 15 gespeicherte Datenbankeinträge 21, die nach dem weiter unten noch im Detail beschriebenen erfindungsgemäßen Verfahren in einer geographischen Karte oder auch in Form einer Trefferliste 20 angezeigt werden. Im gezeigten Ausführungsbeispiel ist die Anzeigefläche 10 in eine primäre Anzeigefläche 10a, die als großflächiges Display ausgestaltet ist, und in eine sekundäre Anzeigefläche 10b unterteilt. Die Anzeigeflächen 10a und 10b können dabei physikalisch und räumlich voneinander getrennt sein. Insbesondere erstreckt sich die primäre Anzeigefläche 10a über weite Teile des Cockpits im Fahrzeug, so dass sie sich beispielsweise im Wesentlichen über die gesamte Breite des Fahrzeugs erstreckt oder als sogenanntes Head-Up Display auf die Windschutzscheibe projiziert wird.

Die Steuervorrichtung 13 ist zur Durchführung des erfindungsgemäßen Verfahrens ausgestaltet. Sie umfasst einen Prozessor zum Ausführen eines Programms zur Durchführung einer Konfidenzanalyse und zum Steuern der Systemantworten sowie einen Datenspeicher zum Speichern der Ergebnisse.

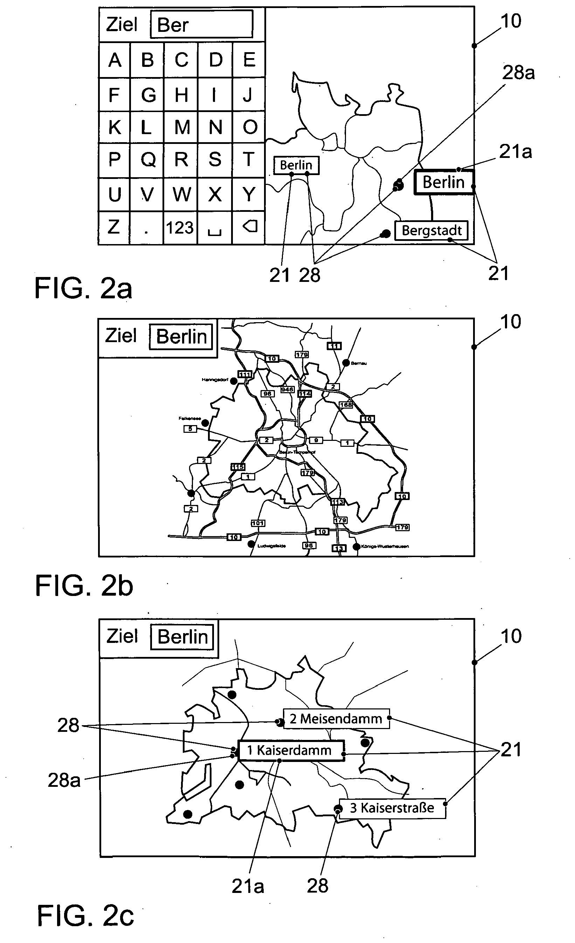

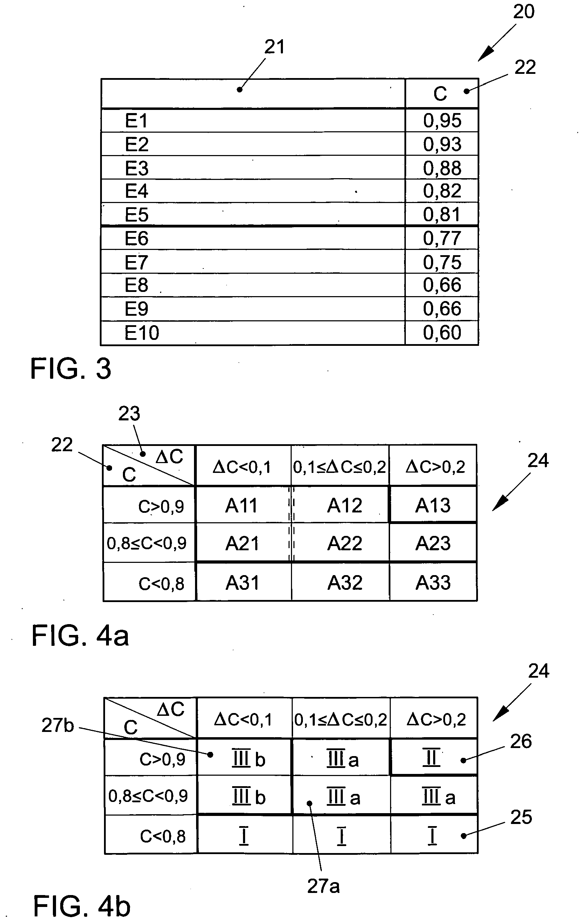

Das erfindungsgemäße Verfahren wird nun anhand von Ausführungsbeispielen mit Bezug zu den Figuren 2 - 4 näher erläutert. Während dabei mit Bezug zu den Figuren 2a bis 2c und 3 Darstellungen der Systemantworten beschrieben werden, wird mit Bezug zu den Figuren 4a und 4b näher auf die Konfidenzanalyse eingegangen. Das Ergebnis der Konfidenzanalyse kann prinzipiell in verschiedenster Weise unterschiedlichen Darstellungen der Systemantworten zugeordnet werden, ohne auf die im Folgenden beschriebenen Zuordnungen beschränkt zu sein.

In den Figuren 2a bis 2c sind graphische Darstellungen mit Visualisierungen von Datenbankeinträgen dargestellt, die gemäß einem Ausführungsbeispiel des erfindungsgemäßen Verfahrens erzeugt wurden. Auf der als Touchscreen ausgestalteten Anzeigefläche 10 in einem Fahrzeug werden graphische Inhalte eines Navigationssystems 17 ausgegeben. Der Nutzer, beispielsweise der Fahrer des Fahrzeugs, möchte als neue Zieladresse "Berlin" eingeben. Dazu wird ihm eine Tastatur auf der Anzeigefläche 10 angezeigt, die er durch einfaches Berühren der Anzeigefläche 10 komfortabel bedienen kann. Muss er seine Nutzereingabe z.B. aufgrund eines anderen notwendigen Vorgangs zum Führen des Fahrzeugs unterbrechen, so führt das System auf der Basis dieser gegebenenfalls unvollständigen Eingabe einen Vergleich mit allen Datenbankeinträgen 21 im Navigationssystem durch und bewertet jeden möglichen Treffer mit einem Konfidenzmaß 22.

Alternativ hätte die Nutzereingabe auch über Sprache erfolgen können. Hier hätten die Ergebnisse insbesondere uneindeutig sein können, weil in dem Fahrzeug ein hoher Störgeräuschpegel herrscht oder der Nutzer undeutlich spricht. Der Datenbankvergleich könnte in analoger Weise durchgeführt werden. Insbesondere kann die Nutzereingabe mehrteilig sein, indem beispielsweise Straße und Ortsname angegeben werden oder die einzelnen Teile der Nutzereingabe multimodal erfolgen, z.B. manuell und über Sprache, wie dies in der eingangs zitierten DE 10 2008 008 948 A1 beschrieben ist.

In der Konfidenzanalyse werden insbesondere die z.B. eingegebenen Buchstaben "Ber" mit den vorhandenen Datenbankeinträgen 21 verglichen. Zusätzlich kann beispielweise berücksichtigt werden, welche Ziele in letzter Zeit angefahren wurden, welches die aktuelle Position des Fahrzeugs ist, oder ob weitere Attribute zu der Nutzereingabe bekannt sind, beispielsweise wenn in einer vorangegangenen Suche oder in einer mehrteiligen Eingabe ein Straßenname angegeben wurde.

Im Ausführungsbeispiel werden mehrere mögliche Treffer gefunden, deren ermittelte Werte des Konfidenzmaßes 22 hoch sind. Den entsprechenden Datenbankeinträgen 21 werden Positionen 28 auf der Karte zugeordnet und an den Positionen 28 graphisch repräsentiert. Der Datenbankeintrag 21a mit dem höchsten Konfidenzmaß 22 wird ausgewählt. Systemseitig wird nun auf eine weitere Nutzereingabe entweder in Form einer Bestätigung des ausgewählten Datenbankeintrags 21a oder in Form einer Korrektureingabe gewartet.

Erkennt der Nutzer, dass es sich bei dem ausgewählten Datenbankeintrag 21a nicht um den gewünschten Zielort handelt, so kann er eine entsprechende Korrektur eingeben, insbesondere einen der anderen dargestellten Datenbankeinträge 21 durch Berühren der jeweiligen Position 28 auf dem Touchscreen auswählen. Falls nach Ablauf einer Zeitspanne keine weitere Nutzereingabe erfolgt, wird in einen Bereich um die Position 28a des bereits ausgewählten Datenbankeintrags 21a automatisch hineingezoomt, wie in Figur 2b dargestellt ist. Dabei kann die Zeitspanne umso kürzer gewählt sein, je eindeutiger das Ergebnis der Konfidenzanalyse war, insbesondere wenn wie im gezeigten Beispiel nur drei mögliche Ergebnisse erkannt wurden.

In Figur 2c ist gezeigt, wie nach dem Hineinzoomen in ein Gebiet um die gewünschte Stadt die mehrteilige Nutzereingabe abermals mit Datenbankeinträgen 21 verglichen wird und nun zur Bestimmung der gewünschten Strasse wiederum drei mögliche Treffer an den zugeordneten Positionen 28 auf der Karte angezeigt werden. Auch hier wird wiederum ein Datenbankeintrag 21a ausgewählt und es würde (nicht gezeigt) nach Ablauf einer Zeitspanne ohne Nutzereingabe automatisch in einen Bereich um die Position 28a um den ausgewählten Datenbankeintrag 21a hineingezoomt.

In Figur 3 ist der schematische Aufbau einer Trefferliste 20 gezeigt, die gemäß einem weiteren Ausführungsbeispiel des erfindungsgemäßen Verfahrens generiert wurde. Die Trefferliste 20 umfasst zwei Spalten, von denen in der linken Spalte relevante Datenbankeinträge 21 aufgelistet und in der rechten Spalte die dazugehörigen berechneten Werte des Konfidenzmaßes 22 gegenübergestellt sind. Die Datenbankeinträge 21 sind in absteigender Reihenfolge des zugeordneten Konfidenzmaßes 22 sortiert. Das Konfidenzmaß nimmt im Ausführungsbeispiel Werte zwischen 0 ≤ C ≤ 1 an. Ein erster Schwellenwert wird auf C = 0,8 festgesetzt, wobei bei der Anzeige einer Trefferliste nur Datenbankeinträge mit einem Konfidenzmaß oberhalb dieses ersten Schwellenwerts angezeigt werden. Zusätzlich kann die Anzeige der Datenbankeinträge auf eine feste Anzahl begrenzt sein, beispielsweise auf zehn Treffer, um eine übersichtliche Darstellung zu gewährleisten und den Nutzer, insbesondere den Fahrer des Fahrzeugs, nicht visuell zu überfordern.

In den Figuren 4a und 4b ist schematisch die Zuordnung der Klassen der Systemantworten in Abhängigkeit von dem Ergebnis der Konfidenzanalyse gemäß einem Ausführungsbeispiel des erfindungsgemäßen Verfahrens dargestellt. Das Ergebnis der Konfidenzanalyse wird in einer Ergebnistabelle 24 als 3x3-Matrix kategorisiert, indem zwei Kriterien auf das Über- bzw. Unterschreiten je zweier Schwellenwerte untersucht werden. Das erste Kriterium ist die Prüfung, ob der höchste auftretende Wert C des Konfidenzmaßes 22 die zweiten Schwellenwerte C = 0,8 und C = 0,9 überschreitet. Das zweite Kriterium ist die Prüfung, ob der Wert ΔC der Differenz 23 zwischen dem höchsten und zweithöchsten Wert C des Konfidenzmaßes 22 die dritten Schwellenwerte ΔC = 0,1 und ΔC = 0,2 unterschreitet.

Das Ergebnis der Konfidenzanalyse ist umso eindeutiger, je weiter rechts und je weiter oben das Ergebnis in der Ergebnistabelle 24 liegt. So ist in dem Matrixfeld A13 das Konfidenzmaß des relevantesten Datenbankeintrags hoch (> 0,9) und der Abstand zum nächst folgenden Datenbankeintrag auch groß (> 0,2). Entsprechend uneindeutig ist das Ergebnis bei den Matrixfeldern A31 - A33.

Es ist daher sinnvoll, die uneindeutigen Suchergebnisse repräsentiert durch die Matrixfelder A31 - A33 einer Systemantwort der ersten Klasse I, definiert durch den Wertebereich 25, zuzuordnen, die zu einer zweiten Nutzereingabe auffordert. Auf der Basis der ersten Nutzereingabe ist in diesem Falle nicht davon auszugehen, dass systemseitig der gewünschte Datenbankeintrag treffsicher erkannt und ausgewählt werden kann. Um Fehlauslösungen zu vermeiden, kann daher eine zweite Nutzereingabe im Dialogverlauf schneller zum gewünschten Ergebnis führen. Insbesondere kann die zweite Nutzereingabe dadurch unterstützt und beschleunigt werden, dass die Datenbankeinträge 21 mit den höchsten Werten des Konfidenzmaßes 22, wie beispielsweise in der Figur 3 beschrieben, angezeigt werden, was die Wiedererkennung und den Komfort bei der zweiten Nutzereingabe, z.B. einer Auswahl durch Antippen auf der berührungsempfindlichen Anzeigefläche 10, erhöht.

Analog kann ein eindeutiges Suchergebnis repräsentiert durch das Matrixfeld A13 einer Systemantwort der zweiten Klasse II, definiert durch den Wertebereich 26, zugeordnet werden. Auf der Basis der ersten Nutzereingabe ist davon auszugehen, dass systemseitig der gewünschte Datenbankeintrag treffsicher erkannt und ausgewählt werden kann. Um unnötige systemseitige Rückfragen an den Nutzer zu vermeiden, kann daher sofort auf Basis des ausgewählten Datenbankeintrags 21 eine Funktion ausgeführt werden, was den Dialogverlauf beschleunigt und schneller zum gewünschten Ergebnis führt.

Die übrigen Matrixfelder werden einer Systemantwort der dritten Klasse III, definiert durch den Wertebereich 27, zugeordnet. Es findet dabei sowohl eine Auswahl des Datenbankeintrags 21 mit dem höchsten Konfidenzmaß 22 statt als auch eine systemseitige Aufforderung zu einer zweiten Nutzereingabe. Dabei kann, wie im gezeigten Beispiel, die Systemantwort der dritten Klasse III in mehrere Wertebereiche 27a und 27b unterteilt sein. Für den Wertebereich 27a ist das Ergebnis der Konfidenzanalyse eindeutiger als für den Wertebereich 27b. Daher ist vorgesehen, für den Wertebereich 27a eine Systemantwort der Klasse lila zu generieren, bei der auf Basis des ausgewählten Datenbankeintrags 21a sofort eine Funktion ausgeführt wird, während für den Wertebereich 27b eine Systemantwort der Klasse IIIb generiert wird, bei der die Funktion erst nach Ablauf einer Zeitspanne ausgeführt wird. In beiden Fällen kann unterstützend eine Trefferliste 20, beispielsweise gemäß Figur 3, angezeigt werden, um eine mögliche zweite Nutzereingabe als Korrektur eines falsch ausgewählten Datenbankeintrags 21a zu beschleunigen. Nach Ablauf der Zeitspanne wird die Trefferliste 20 wieder ausgeblendet.

Das erfindungsgemäße Verfahren kann in verschiedenster Weise ausgestaltet sein, um an die jeweiligen Gegebenheiten angepasst zu werden. Die Anpassungen betreffen insbesondere die Ein- und Ausgabemodalitäten, die Klassenzuordnung der Systemantworten in Abhängigkeit der Konfidenzanalyse sowie die konkrete Ausgestaltung der Darstellung. Sie können dabei voreingestellt und für den Anwendungsfall optimiert oder aber auch vom Nutzer selber konfigurierbar sein.

Die Ein- und Ausgabemodalitäten für die Nutzereingabe und die Systemausgabe können ergonomisch an den jeweiligen Anwendungsfall angepasst werden. Insbesondere für den Betrieb in einem Fahrzeug eignet sich bei dem erfindungsgemäßen Verfahren eine Nutzereingabe durch Sprache, wobei aber insbesondere multimodale Eingaben unter Einbeziehung von Gesten und über manuelle Bedienelemente vorteilhaft sind. Sprachschnittstellen eignen sich weniger in sogenannten Ruhezonen, in denen der Geräuschpegel niedrig gehalten werden soll, oder für Nutzer mit Hör- oder Sprechstörungen. In diesem Falle kann das erfindungsgemäße Verfahren weiterhin eingesetzt werden, indem manuelle Nutzereingaben vorgesehen sind. Ebenso kann eine Systemausgabe multimodal an die Gegebenheiten angepasst werden.

Die Klassifizierung der Systemantworten kann in vielfältiger Weise erfolgen. So können mehr als zwei Kriterien für das Ergebnis der Konfidenzanalyse betrachtet und dabei viele Schwellenwerte pro Kriterium definiert werden. Auf diese Weise kann das System noch differenzierter auf eine Nutzereingabe reagieren und somit die Performance und Reaktionszeit optimieren. Insbesondere kann aus dem höchsten Wert oder den höchsten Werten des Konfidenzmaßes oder Summen und Differenzen davon die Zeitspanne berechnet werden, nach der ein Übergang einer Systemantwort der dritten Klasse in eine Systemantwort der ersten oder zweiten Klasse übergeht. Diese Werte können insbesondere auf das Anwendungsprogramm abgestimmt sein, für das die Nutzerschnittstelle bereitgestellt wird.

Für Anwendungsprogramme mit sehr langen Reaktionszeiten kann eine Funktionsausführung schneller aktiviert werden als bei Anwendungsprogrammen mit sehr kurzen Reaktionszeiten. Wird beispielsweise mit dem erfindungsgemäßen Verfahren eine in einem Mobiltelefon gespeicherte Kontaktperson gesucht, zu der ein Anruf über das Mobiltelefon aufgebaut werden soll, so kann dies in einem Fahrzeug bei höherer Geschwindigkeit unter Umständen einige Zeit beanspruchen, weil sich das Mobiltelefon erstens in der lokalen Funkzelle Übertragungsressourcen reservieren muss und zweitens der andere Teilnehmer - gegebenenfalls auch ein Mobiltelefon - erst von dem Netz lokalisiert und die Verbindung dorthin aufgebaut werden muss. In diesem Fall könnte der Rufaufbau frühzeitig vorbereitet werden, auch wenn das Ergebnis der Konfidenzanalyse nicht sehr eindeutig war. Falls der falsche Teilnehmer ausgewählt wurde, kann durch die Korrekturoption der Anrufversuch immer noch rechtzeitig abgebrochen und eine andere Rufnummer gewählt werden.

### Bezugszeichenliste

- 10: Anzeigefläche
- 10a: Primäre Anzeigefläche
- 10b: Sekundäre Anzeigefläche
- 11: Mittel zur manuellen Eingabe
- 12: Mittel zur Spracheingabe
- 13: Steuervorrichtung
- 14: Schnittstelle
- 15: Datenbank
- 16: Navigationssystem
- 17: Funktionssystem mit Funkschnittstelle
- 18: Datenbus im Fahrzeug
- 20: Trefferliste
- 21: Datenbankeinträge
- 21a: ausgewählter Datenbankeintrag
- 22: Konfidenzmaß
- 23: Differenz zweier Konfidenzmaße
- 24: Ergebnistabelle der Konfidenzanalyse
- 25: Wertebereich für eine Systemantwort einer ersten Klasse
- 26: Wertebereich für eine Systemantwort einer zweiten Klasse
- 27a, b: Wertebereich für eine Systemantwort einer dritten Klasse
- 28: Positionen auf einer Karte

## Patentansprüche

1. Verfahren zum Betreiben einer Nutzerschnittstelle, bei dem
- eine erste Nutzereingabe erfasst wird,
- eine Konfidenzanalyse durchgeführt wird, bei der die Nutzereingabe mit mehreren gespeicherten Datenbankeinträgen (21) verglichen wird und jedem so verglichenen Datenbankeintrag (21) ein Wert eines Konfidenzmaßes (22) zugeordnet wird, der die Übereinstimmung der Nutzereingabe mit diesem Datenbankeintrag (21) bewertet, und
- in Abhängigkeit vom Ergebnis der Konfidenzanalyse unterschiedliche Klassen von Systemantworten generiert werden, die sich in wenigstes einem Merkmal voneinander unterscheiden,
- wobei eine Systemantwort einer ersten Klasse als unterscheidendes erstes Merkmal eine Systemausgabe umfasst, die zu einer zweiten Nutzereingabe auffordert, und eine Systemantwort einer zweiten Klasse als unterscheidendes zweites Merkmal die automatische Auswahl eines Datenbankeintrags (21a) umfasst,
**dadurch gekennzeichnet, dass**
- eine Systemantwort einer dritten Klasse das erste und zweite Merkmal umfasst, wobei nach Ablauf einer Zeitspanne die Systemantwort der dritten Klasse automatisch in die Systemantwort der ersten oder zweiten Klasse übergeht,
- in Abhängigkeit von dem Ergebnis der Konfidenzanalyse die Aktivierung einer Funktion auf Basis eines ausgewählten Datenbankeintrags (21a) sofort oder nach Ablauf einer weiteren Zeitspanne erfolgt,
- in Abhängigkeit von dem Ergebnis der Konfidenzanalyse die Aufforderung zur zweiten Nutzereingabe eine Darstellung von Datenbankeinträgen (21) umfasst, deren Anzahl begrenzt ist und/oder deren zugeordnete Werte des Konfidenzmaßes (22) oberhalb eines ersten Schwellenwerts liegen,
- den Datenbankeinträgen (21) Positionen (28) auf einer Karte zugeordnet werden und
- die Datenbankeinträge (21) auf der Karte an den zugeordneten Positionen (28) graphisch repräsentiert werden, wobei nach Ablauf der weiteren Zeitspanne automatisch in einen Bereich um den Datenbankeintrag (21a) mit dem höchsten Konfidenzmaß (22) hineingezoomt wird.

2. Verfahren nach Anspruch 1,
**dadurch gekennzeichnet,**
**dass** der Übergang der Systemantwort in Abhängigkeit von dem Ergebnis (24) der Konfidenzanalyse erfolgt.

3. Verfahren nach einem der vorangegangenen Ansprüche,
**dadurch gekennzeichnet,**
**dass** bei einer Systemantwort der dritten Klasse vor Ablauf der Zeitspanne eine zweite Nutzereingabe erfolgt, auf deren Basis die Funktion aktiviert wird.

4. Verfahren nach einem der vorangegangen Ansprüche,
**dadurch gekennzeichnet,**
**dass** das Ergebnis der Konfidenzanalyse umfasst,
- ob der höchste Wert des Konfidenzmaßes (22) einen zweiten Schwellenwert überschreitet und/oder
- wie viele Werte des Konfidenzmaßes (22) diesen zweiten Schwellenwert überschreiten und/ oder
- ob die Differenz zwischen dem höchsten und einem der nächst höchsten Werte des Konfidenzmaßes (22) einen dritten Schwellenwert unterschreitet.

5. Verfahren nach einem der vorangegangenen Ansprüche,
**dadurch gekennzeichnet,**
**dass** in Abhängigkeit von dem Ergebnis der Konfidenzanalyse die Systemausgabe auf unterschiedlichen Anzeigeflächen (10a, 10b) oder an unterschiedlichen Positionen auf einer Anzeigefläche (10) erfolgt.

6. Vorrichtung zum Betreiben einer Nutzerschnittstelle, umfassend
- Mittel (11, 12) zum Erfassen von Nutzereingaben,
- eine Schnittstelle (14) zu einer Funktionseinrichtung, in der Datenbankeinträge (21) gespeichert sind,
- eine Anzeigefläche (10) zum visuellen Darstellen von Systemausgaben und
- eine Steuervorrichtung (13) zur Durchführung einer Konfidenzanalyse, wobei Vergleiche zwischen Nutzereingaben mit mehreren gespeicherten Datenbankeinträgen (21) durchführbar sind und jedem so verglichenen Datenbankeintrag (21) ein Wert eines Konfidenzmaßes (22) zuordenbar ist, der die Übereinstimmung der Nutzereingabe mit diesem Datenbankeintrag (21) bewertet, und
- mittels der Steuervorrichtung (13) in Abhängigkeit vom Ergebnis der Konfidenzanalyse unterschiedliche Systemantworten generierbar sind, die sich in wenigstes einem Merkmal voneinander unterscheiden,
- wobei eine Systemantwort einer ersten Klasse als unterscheidendes erstes Merkmal eine Systemausgabe umfasst, die zu einer zweiten Nutzereingabe auffordert, und eine Systemantwort einer zweiten Klasse als unterscheidendes zweites Merkmal die automatische Auswahl eines Datenbankeintrags (21a) umfasst,
**dadurch gekennzeichnet, dass**
- mittels der Steuervorrichtung (13) eine Systemantwort einer dritten Klasse erzeugbar ist, die das erste und zweite Merkmal umfasst, wobei nach Ablauf einer Zeitspanne die Systemantwort der dritten Klasse automatisch in die eine Systemantwort der ersten oder zweiten Klasse übergeht,
- in Abhängigkeit von dem Ergebnis der Konfidenzanalyse eine Funktion auf Basis eines ausgewählten Datenbankeintrags (21a) sofort oder nach Ablauf einer weiteren Zeitspanne aktivierbar ist,
- in Abhängigkeit von dem Ergebnis der Konfidenzanalyse die Aufforderung zur zweiten Nutzereingabe eine Darstellung von Datenbankeinträgen (21) umfasst, deren Anzahl begrenzt ist und/oder deren zugeordnete Werte des Konfidenzmaßes (22) oberhalb eines ersten Schwellenwerts liegen,
- den Datenbankeinträgen (21) Positionen (28) auf einer Karte zuordenbar ist und
- die Datenbankeinträge (21) auf der Karte an den zugeordneten Positionen (28) graphisch repräsentiert werden, wobei nach Ablauf der weiteren Zeitspanne automatisch in einen Bereich um den Datenbankeintrag (21a) mit dem höchsten Konfidenzmaß (22) hineingezoomt wird.

7. Fahrzeug mit einer Vorrichtung zum Betreiben einer Nutzerschnittstelle nach Anspruch 6.

## Claims

1. Method for operating a user interface, in which
- a first user input is captured,
- a confidence analysis is carried out, in which the user input is compared with a plurality of stored database entries (21) and each database entry (21) compared in this manner is assigned a value of a confidence measure (22), which valve assesses the correspondence of the user input to this database entry (21), and
- on the basis of the result of the confidence analysis, different classes of system responses are generated, which differ from one another in at least one feature,
- wherein a system response of a first class comprises, as a distinguishing first feature, a system output which requests a second user input, and a system response of a second class comprises, as a distinguishing second feature, the automatic selection of a database entry (21a) ,
**characterized in that**
- a system response of a third class comprises the first and second features, wherein the system response of the third class automatically changes to the system response of the first or second class after expiry of a period,
- on the basis of the result of the confidence analysis, a function is activated on the basis of a selected database entry (21a) immediately or after expiry of a further period,
- on the basis of the result of the confidence analysis, the request for the second user input comprises a display of database entries (21), the number of which is limited and/or the associated values of the confidence measure (22) of which are above a first threshold value,
- the database entries (21) are assigned positions (28) on a map, and
- the database entries (21) are graphically represented on the map at the assigned positions (28), wherein an area around the database entry (21a) with the highest confidence measure (22) is automatically zoomed in on after expiry of the further period.

2. Method according to Claim 1,
**characterized**
**in that** the system response changes on the basis of the result (24) of the confidence analysis.

3. Method according to one of the preceding claims,
**characterized**
**in that**, in the event of a system response of the third class, a second user input is effected before expiry of the period, on the basis of which input the function is activated.

4. Method according to one of the preceding claims,
**characterized**
**in that** the result of the confidence analysis comprises
- whether the highest value of the confidence measure (22) exceeds a second threshold value, and/or
- how many values of the confidence measure (22) exceed this second threshold value, and/or
- whether the difference between the highest value and one of the next highest values of the confidence measure (22) undershoots a third threshold value.

5. Method according to one of the preceding claims,
**characterized**
**in that** the system output is effected on different display surfaces (10a, 10b) or at different positions on a display surface (10) on the basis of the result of the confidence analysis.

6. Apparatus for operating a user interface, comprising
- means (11, 12) for capturing user inputs,
- an interface (14) to a functional device which stores database entries (21),
- a display surface (10) for visually displaying system outputs, and
- a control apparatus (13) for carrying out a confidence analysis, wherein user inputs can be compared with a plurality of stored database entries (21) and each database entry (21) compared in this manner can be assigned a value of a confidence measure (22), which value assesses the correspondence of the user input to this database entry (21), and
- on the basis of the result of the confidence analysis, different system responses which differ from one another in at least one feature can be generated by means of the control apparatus (13)
- wherein a system response of a first class comprises, as a distinguishing first feature, a system output which requests a second user input, and a system response of a second class comprises, as a distinguishing second feature, the automatic selection of a database entry (21a) ,
**characterized in that**
- a system response of a third class which comprises the first and second features can be generated by means of the control apparatus (13), wherein the system response of the third class automatically changes to the one system response of the first or second class after expiry of a period,
- on the basis of the result of the confidence analysis, a function can be activated on the basis of a selected database entry (21a) immediately or after expiry of a further period,
- on the basis of the result of the confidence analysis, the request for the second user input comprises a display of database entries (21), the number of which is limited and/or the associated values of the confidence measure (22) of which are above a first threshold value,
- the database entries (21) can be assigned positions (28) on a map, and
- the database entries (21) are graphically represented on the map at the assigned positions (28), wherein an area around the database entry (21a) with the highest confidence measure (22) is automatically zoomed in on after expiry of the further period.

7. Vehicle having an apparatus for operating a user interface according to Claim 6.

## Revendications

1. Procédé pour faire fonctionner une interface utilisateur, dans lequel
- une première entrée d'utilisateur est détectée,
- une analyse de confiance est effectuée, au cours de laquelle l'entrée d'utilisateur est comparée avec plusieurs entrées de la base de données mémorisées (21) et une valeur d'un degré de confiance (22) est associée à chaque entrée de la base de données (21) ainsi comparée, laquelle évalue la coïncidence de l'entrée d'utilisateur avec cette entrée de la base de données (21) et
- en fonction du résultat de l'analyse de confiance, différentes classes de réponses de système sont générées, lesquelles se distinguent les unes des autres par au moins une caractéristique,
- une réponse du système d'une première classe comprenant, en tant que première caractéristique distinctive, une sortie du système qui demande une deuxième entrée d'utilisateur et une réponse du système d'une deuxième classe comprenant, en tant que deuxième caractéristique distinctive, la sélection automatique d'une entrée de la base de données (21a),
**caractérisé en ce que**
- une réponse du système d'une troisième classe comprend la première et la deuxième caractéristique, après l'écoulement d'un intervalle de temps, la réponse du système de troisième classe passant automatiquement en la réponse du système de première ou de deuxième classe,
- en fonction du résultat de l'analyse de confiance, l'activation d'une fonction sur la base d'une entrée de la base de données sélectionnée (21a) est effectuée immédiatement ou après l'écoulement d'un intervalle de temps supplémentaire,
- en fonction du résultat de l'analyse de confiance, la demande d'une deuxième entrée d'utilisateur comprend une représentation d'entrées de la base de données (21) dont le nombre est limité et/ou dont les valeurs associées du degré de confiance (22) sont au-dessus d'une première valeur de seuil,
- des positions (28) sur une carte sont associées aux entrées de la base de données (21) et
- les entrées de la base de données (21) sont représentées sur la carte graphiquement aux positions (28) associées, après l'écoulement de l'intervalle de temps supplémentaire, un zoom avant est automatiquement effectué dans une région autour de l'entrée de la base de données (21a) ayant le plus grand degré de confiance (22) .

2. Procédé selon la revendication 1,
**caractérisé en ce que**
la transition de la réponse du système s'effectue en fonction du résultat (24) de l'analyse de confiance.

3. Procédé selon l'une quelconque des revendications précédentes,
**caractérisé en ce que**
dans le cas d'une réponse du système de troisième classe, avant l'écoulement de l'intervalle de temps, une deuxième entrée d'utilisateur a lieu, sur la base de laquelle la fonction est activée.

4. Procédé selon l'une quelconque des revendications précédentes,
**caractérisé en ce que**
le résultat de l'analyse de confiance comprend
- le fait de savoir si la valeur la plus élevée du degré de confiance (22) est au-dessus d'une deuxième valeur de seuil et/ou
- le fait de savoir combien de valeurs du degré de confiance (22) sont au-dessus de cette deuxième valeur de seuil et/ou
- le fait de savoir si la différence entre la valeur la plus élevée et l'une des valeurs les plus élevées du degré de confiance (22) est en dessous d'une troisième valeur de seuil.

5. Procédé selon l'une quelconque des revendications précédentes,
**caractérisé en ce que**
en fonction du résultat de l'analyse de confiance, la sortie du système s'effectue sur différentes surfaces d'affichage (10a, 10b) ou en des positions différentes sur une surface d'affichage (10) .

6. Dispositif pour faire fonctionner une interface utilisateur, comprenant
- des moyens (11, 12) pour détecter des entrées d'utilisateur,
- une interface (14) avec un dispositif fonctionnel dans laquelle sont mémorisées des entrées de la base de données (21),
- une surface d'affichage (10) pour représenter visuellement des sorties du système et
- un dispositif de commande (13) pour effectuer une analyse de confiance, des comparaisons entre des entrées d'utilisateur et plusieurs entrées de la base de données mémorisées (21) pouvant être effectuées et une valeur d'un degré de confiance (22) pouvant être associée à chaque entrée de la base de données (21) ainsi comparée, laquelle évalue la coïncidence de l'entrée d'utilisateur avec cette entrée de la base de données (21), et
- au moyen du dispositif de commande (13), en fonction du résultat de l'analyse de confiance, différentes entrées du système pouvant être générées, lesquelles se distinguent les unes des autres par au moins une caractéristique,
- une réponse du système d'une première classe comprenant, en tant que première caractéristique distinctive, une sortie du système qui demande une deuxième entrée d'utilisateur, et une réponse du système d'une deuxième classe comprenant, en tant que deuxième caractéristique distinctive, la sélection automatique d'une entrée de la base de données (21a),
**caractérisé en ce que**
- au moyen du dispositif de commande (13), une réponse du système d'une troisième classe peut être générée, laquelle comprend la première et la deuxième caractéristique, après l'écoulement d'un intervalle de temps, la réponse du système de troisième classe passant automatiquement dans la réponse du système de première ou de deuxième classe,
- en fonction du résultat de l'analyse de confiance, une fonction, sur la base d'une entrée de la base de données sélectionnée (21a), peut être activée immédiatement ou après l'écoulement d'un intervalle de temps supplémentaire,
- en fonction du résultat de l'analyse de confiance, la demande de la deuxième entrée d'utilisateur comprend une représentation d'entrées de la base de données (21) dont le nombre est limité et/ou dont les valeurs associées du degré de confiance (22) se situent au-dessus d'une première valeur de seuil,
- des positions (28) sur une carte pouvent être associées aux entrées de la base de données (21) et
- les entrées de la base de données (21) sont représentées graphiquement sur la carte aux positions associées (28), après l'écoulement de l'intervalle de temps supplémentaire, un zoom avant étant automatiquement effectué dans une région autour de l'entrée de la base de données (21a) ayant le plus grand degré de confiance (22) .

7. Véhicule comprenant un dispositif pour faire fonctionner une interface utilisateur selon la revendication 6.
